# EUROPÄISCHE PATENTSCHRIFT

(11) **EP 2 899 565 B1**
(45) Veröffentlichungstag und Bekanntmachung des Hinweises auf die Patenterteilung: **13.04.2016**
(21) Anmeldenummer: 14195141.8
(22) Anmeldetag: 27.11.2014
(51) Int. Cl.: G01S 17/10, G01S 7/292, G01S 7/487, G01S 13/10

(54) **Entfernungsmessender Sensor und Verfahren zur Erfassung und Abstandsbestimmung von Objekten**
Distance measuring sensor and method for recording and determining the distance of an object
Capteur mesurant l'éloignement et procédé destiné à la détection et la détermination de l'éloignement d'objets

(30) Priorität: 22.01.2014 DE 102014100696
(43) Veröffentlichungstag der Anmeldung: 29.07.2015
(73) Patentinhaber: SICK AG, 79183 Waldkirch (DE)
(72) Erfinder: Hammes, Markus, Dr., 79117 Freiburg (DE); Müncher, Martin, 79249 Merzhausen (DE)
(74) Vertreter: Hehl, Ulrich

(56) Entgegenhaltungen:
- EP-A1- 2 189 814
- WO-A1-99/60419
- WO-A1-2005/045464

## Beschreibung

Die Erfindung betrifft einen entfernungsmessenden Sensor und ein Verfahren zur Erfassung und Abstandsbestimmung von Objekten nach dem Oberbegriff von Anspruch 1 beziehungsweise 13.

Zahlreiche Sensoren nutzen ein Signallaufzeitprinzip, bei dem das Zeitintervall zwischen Senden und Empfang eines Signals über die Signallaufzeit in eine Entfernung umgerechnet wird. Dabei werden so verschiedene Frequenzbereiche des elektromagnetischen Spektrums ausgenutzt wie Mikrowellen und Licht. Ein Anwendungsbereich für Mikrowellen ist die Füllstandsmessung. Hierbei wird die Signallaufzeit bis zur Reflexion an einer Grenzfläche des Mediums bestimmt, dessen Füllstand zu messen ist. Dabei werden die abgestrahlten Mikrowellen in einer Sonde geführt (TDR, time domain reflectometry), oder alternativ wie bei einem Radar frei abgestrahlt und von der Grenzfläche reflektiert.

Bei optoelektronischen Sensoren nach dem Prinzip des Lichtlaufzeitverfahrens werden Lichtsignale ausgesandt, und die Zeit bis zum Empfang der an Objekten remittierten oder reflektierten Lichtsignale wird gemessen. Optoelektronische Entfernungsmessung kann beispielsweise in der Fahrzeugsicherheit, der Logistik- oder Fabrikautomatisierung oder der Sicherheitstechnik benötigt werden. Meist ist die gesuchte Ausgabegröße der gemessene Abstand. Alternativ kann ein Entfernungsmesser nach dem Lichtlaufzeitverfahren auch schaltend arbeiten, indem eine Entfernungsänderung eines in einem bestimmten Abstand erwarteten Reflektors oder eines reflektierenden oder remittierenden Objekts erkannt wird. Eine besondere Anwendung ist eine Reflexionslichtschranke mit Überwachung des Abstandes zu ihrem Reflektor. Das Lichtlaufzeitverfahren ist auch das Prinzip, nach dem entfernungsmessende Laserscanner arbeiten, die periodisch eine Überwachungsebene oder sogar einen dreidimensionalen Raumbereich abtasten. Speziell in der Sicherheitstechnik werden sichere Laserscanner eingesetzt, die konfigurierbare Schutzfelder auf unzulässige Eingriffe überwachen. Sichere Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsübenrvachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Die Genauigkeit der Entfernungsmessung hängt entscheidend davon ab, wie gut der Empfangszeitpunkt bestimmt werden kann. Herkömmliche Pulsverfahren senden einen Einzelpuls und bestimmen die Lage des daraufhin empfangenen Echopulses. Dabei wird der Echopuls durch eine Komparatorschwelle von Störsignalen unterschieden. Das funktioniert nur dann zuverlässig, wenn die Störsignale unterscheidbar kleiner sind als die kleinsten aufzulösenden Echopulse. Schwierigkeiten ergeben sich besonders dann, wenn das Empfangssignal von starkem Rauschen etwa durch Fremdlicht überlagert ist, wenn bei großen Entfernungen ein schwaches Nutzsignal aufgelöst werden soll oder wenn ungünstige Umgebungsbedingungen herrschen, die systematisch relativ hohe Echopulse verursachen, die nicht erfasst werden sollen, etwa von Nebel, starker Staubbelastung, der Luft oder Verunreinigungen einer Frontscheibe des Sensors. Die herkömmliche Gegenmaßnahme ist der Versuch, durch bauliche Maßnahmen wie optische Streulichtunterdrückung, rauscharme elektronische Signalverarbeitung und dergleichen einen besonders großen Signalabstand zwischen schwächstem Nutzsignal und relevanten Störsignalpegeln zu erzeugen. Der erreichte Signalabstand entscheidet dann über die Robustheit des Systems gegenüber den verschiedenen Störeinflüssen.

Beispielsweise aus EP 1 972 961 A1, EP 2 469 296 A1 oder EP 2 189 814 A1 ist ein Laufzeitverfahren bekannt, das anstelle einer Einzelpulsauswertung eine Vielzahl von Einzelmessungen mit jeweils einem Sendepuls durchführt und die jeweiligen Empfangssignale in einem Histogramm aufaddiert. Durch diese statistische Auswertung addiert sich das Nutzsignal, während zufällige Rauscheinflüsse ausgemittelt werden, so dass das Signal-Rausch-Verhältnis deutlich verbessert wird. Eine Besonderheit des Verfahrens ist, dass verschiedene Maßnahmen getroffen werden, um diese komplexere Auswertung auf besonders kostengünstiger Hardware durchführen zu können. Dazu zählt, dass anstelle eines aufwändigen schnellen A/D-Wandlers lediglich ein Komparator eingesetzt wird, die das Einzelsignal nur mit 1-Bit-Auflösung digitalisieren, also binarisieren. Außerdem wird in EP 2 189 804A1 und EP 2 189 805 A1 die effektive Abtastrate eines solchen statistischen Verfahrens durch mehrere Maßnahmen erheblich erhöht, um den Empfangszeitpunkt und damit die Lichtlaufzeit mit größerer zeitlicher Präzision zu erfassen. Nachteilig ist, dass die 1-Bit-Abtastung Informationen über die ursprüngliche Signalhöhe zerstört. Dadurch ist je nach Situation kaum möglich, zwischen schwachen Echos beispielsweise von störenden Partikeln oder der Frontscheibe und Echos von zu erfassenden Objekten zu unterscheiden. Das Verfahren ist deshalb unter Umständen sehr empfindlich auf systematische Störsignale.

Die WO 2005/045464 A1 beschreibt ein Verfahren zur Entfernungsmessung mit einer Folge von Pulsen, die empfangsseitig diskretisiert und aufaddiert werden. Zuvor werden die empfangenen Pulse noch mit einem Modulationssignal überlagert.

Es ist daher Aufgabe der Erfindung, die Zuverlässigkeit der Messwerterfassung eines entfernungsmessenden Sensors zu verbessern.

Diese Aufgabe wird durch einen entfernungsmessenden Sensor und ein Verfahren zur Erfassung und Abstandsbestimmung von Objekten nach Anspruch 1 beziehungsweise 13 gelöst. Dabei wird zunächst der einleitend erläuterte statistische Ansatz verfolgt, eine Vielzahl von Sendepulsen auszusenden und ein Histogramm der jeweils daraufhin aufgezeichneten digitalisierten Empfangssignale zu sammeln. Die Erfindung geht dann von dem Grundgedanken aus, dem Empfangssignal vor dem Digitalisieren ein künstliches Rauschen hinzuzufügen, also insbesondere ein Zufallsrauschen auf das Empfangssignal zu addieren.

Es zeigt sich nämlich bei geringer Bitauflösung des AD-Wandlers und insbesondere einer 1-Bit-Auflösung für die Digitalisierung des Empfangssignals, dass in dem Histogramm kleine Störechos nicht mehr von den Nutzechos der zu erfassenden Objekte unterschieden werden können. Dieses Phänomen zeigt sich paradoxerweise besonders stark bei geringem intrinsischen Rauschen. Die üblichen Maßnahmen zur Rauschunterdrückung, die man herkömmlich für eine verbesserte Messung trifft, führen also sogar noch zu einer Verschlechterung. Im Extremfall idealer, unverrauschter Signale und 1-Bit-Auflösung des A/D-Wandlers wird selbst ein minimales Störecho sogar prinzipiell ununterscheidbar von einem sehr großen Nutzecho, also beispielsweise ein Staubkorn von einem hellen, großen Ziel. Denn selbst das Staubkorn steuert das Histogramm bereits vollständig aus, d.h. alle Bins im Bereich des von dem Staubkorn verursachten Echosignals sind bereits maximal gefüllt. Dies löst die Erfindung, indem ein künstliches Rauschen hinzugefügt wird. Über das Verhältnis von künstlichem Rauschpegel zu aufzulösendem Nutzpegel kann die Empfindlichkeit des Sensors eingestellt werden.

Die Erfindung hat den Vorteil, dass durch das künstliche Rauschen ein Arbeitspunkt eingestellt werden kann, in dem der Sensor robust zwischen Störechos und Nutzechos unterscheidet. Dadurch werden Messfehler reduziert. Bei einem sicheren Sensor werden Fehlabschaltungen aufgrund von Störsignalen verhindert und so die Verfügbarkeit erheblich verbessert.

Der A/D-Wandler ist bevorzugt als Binarisierer ausgebildet. Die Digitalisierung erfolgt also nur mit 1-Bit-Auflösung. Das lässt sich besonders einfach und kostengünstig beispielsweise durch einen Komparator beziehungsweise einen Limiter-Verstärker implementieren, so dass kein hochwertiger A/D-Wandler mit hoher Abtastrate und gleichzeitig hohe Bitauflösung benötigt wird. Das geschilderte Problem, wonach Störechos und Nutzechos bei geringer Bitauflösung nicht ausreichend voneinander unterschieden werden können, zeigt sich im Extremfall der Binarisierung besonders deutlich. Die Information reicht gerade aus, um zwischen "Ereignis" und "kein Ereignis" zu unterscheiden, ermöglicht aber überhaupt keine quantitative Bewertung eines "Ereignisses". Hier wirkt sich also die Unterscheidbarkeit durch einen geeigneten künstlichen Rauschpegel besonders vorteilhaft aus.

Zwischen Empfänger und A/D-Wandler ist vorzugsweise eine analoge Vorverarbeitungsschaltung mit einem Filter zur Umwandlung des zunächst unipolaren Empfangssignals in ein bipolares Signal angeordnet. Die Echos des Sendepulses von Objekten oder Störern im Überwachungsbereich sind zunächst ebenfalls zumindest grob pulsförmig, bilden also einen Peak und sind demnach unipolar. Das gilt vor allem bei Lichtsignalen, die nicht negativ werden können und demnach auch nur unipolare Empfangssignale erzeugen. Das Filter wandelt das unipolare Empfangssignal in ein bipolares Signal beispielsweise als eine Schwingung mit mindestens einem Maximum, einem Minimum und einem Nulldurchgang dazwischen. Als Filter eignet sich insbesondere ein Bandpassfilter oder ein Differenzierer. Die Vorverarbeitungsschaltung kann zusätzlich einen Verstärker, insbesondere einen Transimpedanzverstärker, vor dem Filter und einen Limiter- oder Begrenzungsverstärker hinter dem Filter zur Verstärkung des positiven bzw. negativen Anteils des biploaren Signals bis auf einen Sättigungswert aufweisen. Der Begrenzungsverstärker treibt das bipolare Signal gezielt in die Sättigung, damit es bei einer anschließenden Schwellbewertung in einem Binarisierer in jedem Fall erkannt wird.

Die Steuer- und Auswertungseinheit ist bevorzugt auf einem digitalen Baustein, insbesondere in programmierbarer Logik, in ASIC (Application Specific Integrated Circuit) oder auf einem FPGA (Field Programmable Gate Array) implementiert. Ein derartiger digitaler Baustein ist vergleichsweise kostengünstig und dennoch in der Lage, nicht nur dank des erfindungsgemäßen Histogramm- oder Pulsmittelungsverfahrens die Anforderungen an eine hochpräzise Messung zu erfüllen, sondern auch noch sehr viele der geforderten Funktionen mit zu implementieren, statt dafür zusätzliche Bausteine vorzusehen, etwa den A/D-Wandler in Form von Komparatoren an den Eingängen oder den Rauschgenerator. Unter digitalem Baustein soll hier und im Folgenden jegliche konfigurierbare digitale Auswertung gemeint sein, die durch Vorkonfiguration der digitalen Verschaltung des Bausteins auf die Anwendung angepasst ist, statt wie bei einem echten Mikroprozessor durch Ablauf eines Programms auf einer universellen Auswertungseinheit zu erfolgen. Die derzeit bevorzugte Variante einer solchen programmierbaren Logik ist ein FPGA. Deshalb wird im Folgenden mehrfach von FPGA stellvertretend für die genannte Familie von digitalen Bausteinen gesprochen, die Erfindung ist aber darauf nicht beschränkt.

Der Rauschgenerator ist bevorzugt digital implementiert. Das ermöglicht, die Eigenschaften des Rauschens, wie Pegel, Spektrum oder Art des Rauschens, nahezu frei festzulegen. Wie schon im vorigen Absatz gesagt, kann der digitale Rauschgenerator praktisch kostenfrei auf dem digitalen Baustein der Steuer- und Auswertungseinheit mit implementiert werden. Allerdings ist noch ein DAC erforderlich, um das Rauschen dem analogen Empfangssignal hinzuzufügen. Alternativ zu einem digitalen Rauschgenerator ist auch ein analoger Rauschgenerator denkbar, oder das Rauschen wird sogar schon vor dem Empfänger eingekoppelt, etwa im Falle eines optoelektronischen Sensors in Form von Licht.

Der Rauschgenerator erzeugt bevorzugt einen durch die Steuer- und Auswertungseinheit zur Einstellung der Empfangsempfindlichkeit des Sensors veränderbaren Rauschpegel. Aufgrund der besonderen Auswertung, vor allem bei einer besonders bevorzugten AD-Wandlung mit 1-Bit-Auflösung, reicht schon ein schwaches Empfangssignal aus, um das Histogramm auszusteuern. Durch das künstliche Rauschsignal wird Variabilität ins Spiel gebracht, so dass sich schwache und starke Signale wieder in unterschiedlichen Histogrammen äußern. Das Verhältnis von Nutzsignal zu Rauschsignal entscheidet deshalb über die Empfindlichkeit, und somit kann die Empfindlichkeit über den Rauschpegel eingestellt werden. Diese Zusammenhänge werden in der Figurenbeschreibung noch detailliert erläutert.

Die Steuer- und Auswertungseinheit ist bevorzugt dafür ausgebildet, einen geeigneten Rauschpegel des Rauschgenerators vorab festzulegen. Dabei wird in einer Art Kalibrierung ein geeigneter Rauschpegel eingestellt, bei dem der Sensor zuverlässig zwischen Störsignalen und gewünschten Nutzsignalen unterscheidet. Beispielsweise wird der Rauschpegel im Verhältnis zu einem bekannten Störsignal eingestellt, etwa einem Frontscheibenreflex, so dass dieser im Histogramm nicht mehr als Nutzsignal erfasst wird.

Die Steuer- und Auswertungseinheit ist bevorzugt dafür ausgebildet, beim Festlegen eines Rauschpegels des Rauschgenerators ein natürliches Rauschsignal zu berücksichtigen. Genaugenommen ist nämlich nicht der künstliche Rauschpegel relevant, sondern das gesamte Rauschen einschließlich des natürlichen oder intrinsischen Rauschens. Genau das führt ja zu der zunächst paradoxen Situation, dass ein besonders rauscharmes System besonders anfällig für schwache Echosignale wird. Deshalb wird in dieser bevorzugten Ausführungsform der künstliche Rauschpegel so eingestellt, dass erst die Summe aus natürlichem und künstlichem Rauschsignal zu dem gewünschten Rauschpegel führt. Dies ist statisch möglich, beispielsweise anhand eines erwarteten intrinsischen Rauschens, kann aber auch dynamisch geschehen, indem das intrinsische Rauschen gemessen und der künstliche Rauschpegel daran angepasst wird. Dieses Vorgehen macht den Sensor besonders robust und dient beispielsweise einer sehr einfachen und effektiven Fremdlichtkompensation.

Die Steuer- und Auswertungseinheit ist bevorzugt dafür ausgebildet, den Rauschpegel des Rauschgenerators während des Sammelns eines Histogramms zu variieren. Dadurch wird die Empfindlichkeit des Sensors dynamisch verändert. Die Umstellung kann zwischen Einzelmessungen vorgenommen werden. Dann gehen in das Histogramm Empfangssignale ein, die mit unterschiedlicher Empfindlichkeit gemessen wurden, was insgesamt den Dynamikbereich erhöht. Alternativ und kumulativ ist auch eine Umstellung innerhalb einer Einzelmessung denkbar. Das führt zu einer unterschiedlichen Empfindlichkeit in unterschiedlichen Entfernungen, beispielsweise um dem abstandsbedingten Intensitätsabfall entgegenzuwirken.

Die Steuer- und Auswertungseinheit ist bevorzugt für eine mehrkanalige Erfassung und Auswertung von Histogrammen ausgebildet, um in den mehreren Kanälen durch unterschiedliche Rauschegel des Rauschgenerators das Empfangssignal mit unterschiedlicher Empfindlichkeit auszuwerten. Damit wird der Dynamikbereich erhöht, weil die Kanäle einander ergänzen. Bei Implementierung auf einem FPGA erfordern die zusätzlichen Kanäle lediglich einige freie Rechenkapazitäten und freie Eingänge mit Komparatoren als Binarisierer. Die Kanäle werden intelligent gemeinsam ausgewertet, etwa indem ein Kanal ausgewählt wird, der ein ausreichend gefülltes, aber noch nicht ausgesteuertes Histogramm liefert, oder indem die Ergebnisse der einzelnen Kanäle gemittelt werden, möglicherweise mit einem Gütemaß gewichtet. Eine mehrkanalige Auswertung kann mit einem einzigen Kanal emuliert werden, indem nacheinander Histogramme bei unterschiedlichem künstlichem Rauschpegel aufgezeichnet und ausgewertet werden.

Der Sensor weist bevorzugt einen Testsignalgenerator zum Einkoppeln eines Testsignals in den analogen Teil des Empfangspfades auf, um die Funktion des Empfangspfads zu überprüfen. Das Testsignal ist insbesondere ein Testpuls mit einer Amplitude, die einem zu erfassenden Nutzsignal entspricht. Der Test impliziert so eine Prüfung, ob die gewünschte Empfindlichkeit tatsächlich eingestellt ist. Man erwartet, den Testpuls zuverlässig im Histogramm zu erfassen, ansonsten wird ein Fehler angenommen, beispielsweise bei dem gewählten Rauschpegel, dem Rauschgenerator oder einem anderen Bauteil im Empfangspfad beziehungsweise in dessen Auswertung.

Der Sensor ist bevorzugt als optoelektronischer Sensor, insbesondere Laserscanner ausgebildet, wobei der Sender ein Lichtsender und der Empfänger ein Lichtempfänger ist. Derartige auf Licht basierende Sensoren werden häufig zur Entfernungsmessung eingesetzt. Sie können einstrahlig sein, also auf ein Messobjekt ausgerichtet werden. Denkbar ist aber auch ein Laserscanner, bei dem die Richtung beispielsweise mittels eines Drehspiegels periodisch variiert wird, in welche die Sendepulse ausgesandt werden, so dass eine Überwachungsebene oder sogar ein Raumbereich abgetastet wird. Ein Beispiel für einen alternativen, nicht auf optischen Signalen basierenden Sensor ist ein TDR-Füllstandssensor.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: ein Blockschaltbild eines entfernungsmessenden Sensors;
- Fig. 2: ein Blockschaltbild eines Messkerns für die Signalverarbeitung in dem Sensor gemäß Figur 1;
- Fig. 3: eine schematische Darstellung der Signale in unterschiedlichen Verarbeitungsstadien zur Erläuterung eines Auswertungsverfahrens mit Histogrammbildung in dem Messkern gemäß Figur 2;
- Fig. 4a-b: eine idealisierte Darstellung eines starken Nutzechos beziehungsweise eines schwachen Störechos und des jeweils zugehörigen Histogramms;
- Fig. 5a-b: eine beispielhafte Darstellung gemäß Figur 4, jedoch mit zusätzlichem schwachem Rauschsignal;
- Fig. 5c-d: eine beispielhafte Darstellung gemäß Figur 4, jedoch mit zusätzlichem starkem Rauschsignal;
- Fig. 6: beispielhafte Kennlinien der Aussteuerung des Histogramms gegenüber dem Empfangssignalpegel für verschiedene Rauschpegel; und
- Fig. 7: ein Blockdiagramm des Empfangspfades mit Einkoppeln von künstlichem Rauschen.

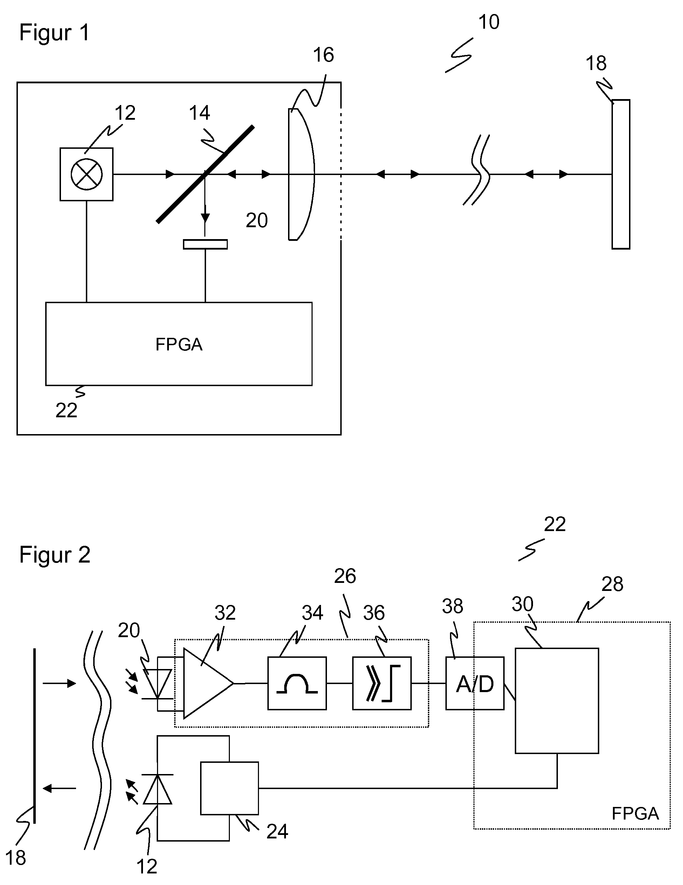

Figur 1 zeigt ein Blockschaltbild eines entfernungsmessenden Sensors 10 in einer Ausführungsform als eindimensionaler optoelektronischer Entfernungstaster. Ein Lichtsender 12 ist so ausgerichtet, dass sein Sendelicht einen Teilerspiegel 14 transmittiert und anschließend über eine Optik 16 in einen Überwachungsbereich 18 gelangt. Dort wird das Sendelicht, wenn sich ein Objekt 18 im Strahlengang befindet, an diesem Objekt 18 reflektiert oder remittiert und kehrt erneut durch die Optik 16 zu dem Teilerspiegel 14 zurück, wo es in einem Lichtempfänger 20 gespiegelt und dort erfasst wird. Die Teilerspiegelanordnung ist rein beispielhaft zu verstehen, die Erfindung umfasst ebenso andere Anordnungen ohne Teilerspiegel wie beispielsweise Doppelaugen. Auch die Erläuterung an einem eindimensionalen optoelektronischen Sensor ist nur exemplarisch zu verstehen, denn ebenso kann der Sensor 10 ein mehrdimensionales System sein, wie ein Laserscanner, oder mit gänzlich anderen elektromagnetischen Signalen arbeiten, wie ein TDR-Füllstandssensor.

Ein Messkern 22 steuert den Lichtsender 12 an und wertet die Signale des Lichtempfängers 20 aus. Um für eine Abstandsmessung des Objekts 18 eine Lichtlaufzeit zu ermitteln, werden Lichtpulse ausgesandt und wieder empfangen, und die Differenz zwischen Sende- und Empfangszeitpunkt wird bestimmt. Diese Auswertung erfolgt aber nicht auf Basis von Einzelereignissen mit nur einem einzigen Lichtpuls, sondern in einer Auswertung mittels eines Histogramms, das von einer Vielzahl von Einzelereignissen gebildet wird.

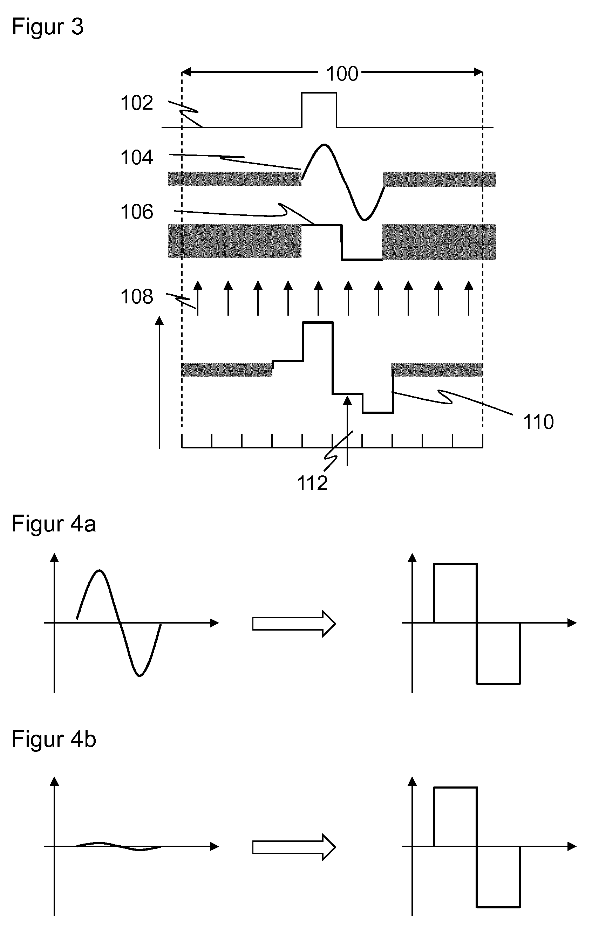

Diese statistische Auswertung wird nun anhand der Figuren 2 und 3 genauer erläutert. Figur 2 zeigt ein Blockschaltbild des Messkerns 22. In einem Sendepfad ist neben dem eigentlichen Sender 12 noch eine Treiberschaltung 24 vorgesehen, während in einem Empfangspfad der Empfänger 20 das Empfangssignal über einen analogen Vorverarbeiter 26 einer beispielsweise auf einem FPGA 28 implementierten Steuer- und Auswertungseinheit 30 zuführt.

Der analoge Vorverarbeiter 26 bildet einen mehrstufigen Verarbeitungspfad. Dieser beginnt mit einem Verstärker 32, etwa einem Transimpedanzverstärker, der das Signal des Empfängers 20 annimmt und verstärkt. Ein nachgeschaltetes Filter 34, das beispielsweise ein Bandpassfilter oder ein Differenzierer sein kann, wandelt das unipolare Signal des Pulses in ein bipolares Signal um. Verstärker 32 und Filter 34 können auch in umgekehrter Reihenfolge geschaltet sein. Als nächste Vorverarbeitungsstufe ist ein Begrenzungsverstärker 36 vorgesehen, der die Amplitude so weit verstärkt und anschließend abschneidet, dass das Pulssignal zu einem in die Sättigung getriebenen Rechteckpuls wird. Dieses Signal wird als letzte Vorverarbeitungsstufe einem A/D-Wandler 38 zugeführt, insbesondere einem Binarisierer, der die Amplitude nicht in einen digitalen Zahlenwert, sondern lediglich in einen Binärwert umwandelt. Der A/D-Wandler 38 ist bevorzugt kein eigener Baustein, sondern über die Eingänge des FPGA 28 realisiert.

Der Signal- und Auswertungspfad durch die soeben beschriebenen Komponenten wird nunmehr mit Hilfe von Figur 3 beschrieben. Die statistische Auswertung einer Vielzahl von Einzelmessungen ermöglicht eine zuverlässige Bestimmung des Empfangszeitpunktes. Der Sender 12 erzeugt dazu in jeweils einer Messperiode 100 ein Sendesignal, das die Bestimmung eines präzisen Zeitpunkts ermöglicht. Als Signalform eignet sich ein Rechteckpuls, es sind aber auch andere Pulse, wie beispielsweise Gausspulse, multimodale Signale beispielsweise zur codierten Zuordnung jedes Signals und auch Stufen denkbar. All diese Signalformen werden im Weiteren nur noch als Puls bezeichnet.

Der Puls wird an dem Zielobjekt 14 reflektiert und nach Umwandlung in dem Empfänger 20 in ein elektrisches Signal in dem Verstärker 32 verstärkt. Der entstehende verstärkte elektrische Empfangspuls 102 ist idealisiert ohne Rauschanteile dargestellt. In dem Filter 34 wird der unipolare Empfangspuls 102 zu einem bipolaren Signal 104 umgewandelt. Dies kann mit einem Bandpassfilter geeigneter Filterfrequenz realisiert werden. Neben dem bipolaren Signal 104 sind graue Rechtecke dargestellt, die den hier nicht betrachteten beliebigen Signalverlauf außerhalb des Empfangspulses 102 symbolisieren sollen. Es ist weiterhin nur eine Sinusschwingung des bipolaren Signals 104 dargestellt. Nachschwingungen, also weitere Sinusperioden mit zunehmend gedämpfter Amplitude, sind der vereinfachten Darstellung halber weggelassen. Selbstverständlich ist auch nicht immer ein reiner Sinus, jedoch eine Kurve mit Maximum und Minimum zu erwarten.

In dem Begrenzungsverstärker 36 wird das bipolare Signal 104 so weit verstärkt und abgeschnitten, dass das eigentliche Signal zu einer Rechteckflanke 106 wird und der durch graue Rechtecke dargestellte Signalanteil in seiner Amplitude über den gesamten Dynamikbereich gedehnt wird. Die Rechteckflanke 106 wird in dem Binarisierer 38 mit einer Abtastrate von beispielsweise 2,5 ns abgetastet, was einem Arbeitstakt des FPGA 28 von 400 MHz entspricht. Diese Abtastrate ist in der Figur 3 durch Pfeile 108 symbolisiert. Die entstehende Bitfolge wird von der Steuer- und Auswertungseinheit 30 verwendet, um ein Histogramm 110 zu bilden. Dafür ist für jedes entsprechend der Abtastrate 2,5 ns breite Bin ein Akkumulator vorgesehen, der nur bei einem zugehörigen Bitwert "1" heraufgezählt wird.

Bei einem idealen Signal würde in diesem Histogramm 110 nur dasjenige Bin gefüllt, über dem die Rechteckflanke 106 liegt. Die von dem Begrenzungsverstärker 36 angehobenen anderen Signalanteile füllen aber auch die übrigen Bins, beispielsweise bei zufälligen Signalanteilen im Erwartungswert etwa in jeder zweiten Messperiode 100. Wird das soeben beschriebene Verfahren iteriert und das Histogramm 108 über k Messperioden 100 gebildet, so sind die Bins im Mittel mit dem Wert k/2 gefüllt, wobei statistische Schwankungen hinzukommen. Dieser Wert k/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Zusammen mit den nicht dargestellten Nachschwingungen zeigt das Histogramm in dem Zeitintervall des Empfangssignals einen charakteristischen Verlauf, dessen Signatur die Steuer- und Auswertungseinheit 30 verwendet, um den Empfangszeitpunkt zu bestimmen. Die statistische Auswertung einer Vielzahl von Einzelmessungen ermöglicht dies auch dann, wenn die Einzelmessung in einer Messperiode 100 wegen zu schwacher Nutzsignale keine zuverlässige Entfernungsbestimmung zuließe.

Der Empfangszeitpunkt lässt sich am besten anhand des ersten Nulldurchgangs von Maximum auf Minimum bestimmen. In der Figur liegt dieser Nulldurchgang in dem mit einem Pfeil 112 bezeichneten Bin. Die zeitliche Genauigkeit dieser Information ist zunächst auf die Auflösung des Histogramms 110, also auf beispielsweise 2,5 ns begrenzt und damit direkt an die Abtastrate des A/D-Wandlers 38 gekoppelt. Durch verschiedene Techniken, wie beispielsweise in den eingangs zitierten EP 2 189 804 A1 und EP 2 189 805 A1 beschrieben, kann diese Auflösung weiter erhöht werden, worauf aber hier nicht näher eingegangen wird.

Die digitale Abtastung und Akkumulation wiederholter Signale in einem Histogramm hat erhebliche Vorteile, um das Nutzsignal vor einem Störhintergrund zu erfassen. Allerdings hängt die Signalhöhe in dem Histogramm nicht wie bei herkömmlichen Verfahren allein von dem Eingangssignal ab, also den Empfangspulsen 102, sondern entscheidend auch von dem konkurrierenden überlagerten Rauschpegel beziehungsweise dem Verhältnis von Nutzsignal und Rauschsignal. Dieser Umstand wird erfindungsgemäß zur Empfindlichkeitsregelung der Übertragung des analogen Eingangssignals auf das digitale Histogramm mittels Einkoppeln eines künstlichen Rauschens genutzt. Dadurch kann die Empfindlichkeit auf einen sinnvollen Arbeitspunkt zur Diskriminierung zwischen Stör- und Nutzsignalen eingestellt werden.

Um zunächst das Problem besser verständlich zu machen, zeigen in einer Idealisierung ohne Rauschanteile Figur 4a ein starkes Nutzecho und Figur 4b ein schwaches Störecho jeweils mit zugehörigem Histogramm. Die Echos entsprechen den Empfangspulsen 102 von einem zu erfassenden Objekt beziehungsweise einem kleinen Störkörper wie einem Staubkorn. Die zugehörigen Histogramme sind aber identisch und erlauben keine Unterscheidung, weil auch das Störecho das Histogramm schon vollständig aussteuert. Das liegt daran, dass die 1-Bit-Digitalisierung nur entscheidet, ob ein Signal oberhalb der Binarisierungsschwelle liegt, in diesem Fall also positiv ist oder nicht. Dieses Kriterium erfüllen aber das starke Nutzecho und das schwache Störecho gleichermaßen und für das Histogramm ununterscheidbar.

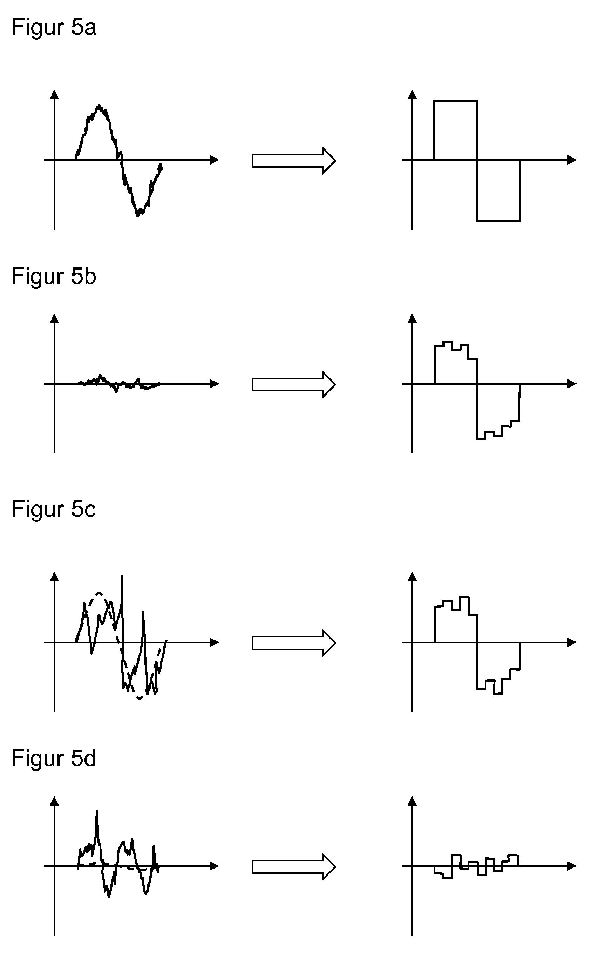

Der erfindungsgemäße Ausweg besteht darin, einen ausreichenden Rauschpegel sicherzustellen. Figur 5a-b illustrieren dies an einem schwachen Rauschpegel. Für das starke Nutzecho gemäß Figur 5a ändert sich nichts. Der Rauschpegel genügt nicht, um einen signifikanten Anteil des Empfangssignals vom positiven in den negativen Bereich zu ziehen oder umgekehrt. Demzufolge bleibt das zugehörige Histogramm vollständig mit Maximalausschlag ausgesteuert. Bei dem schwachen Störecho dagegen reicht der Rauschpegel aus, um in einem messbaren Anteil des Empfangssignals einen Vorzeichenwechsel durch die Binarisierungsschwelle auszulösen. Das Rauschen löst den Determinismus auf. Das zugehörige Histogramm zeigt zwar immer noch deutlich einen bipolaren Empfangspuls, jedoch nicht mehr mit Maximalausschlag. Man erkennt also dank des Rauschens auch noch in dem Histogramm, dass das Signal gemäß Figur 5b schwächer ist als das Signal gemäß Figur 5a.

Bei wesentlich stärkerem Rauschpegel gemäß Figur 5c-d werden auch die Empfangspegel des starken Nutzechos nach Figur 5c durch das Rauschen über die Binarisierungsschwelle getrieben. Das zugehörige Histogramm ist nicht mehr im Maximalausschlag. Der stärkere Rauschpegel dominiert das schwache Störecho gemäß Figur 5d, so dass auch das zugehörige Histogramm nur noch Zufallswerte zeigt und das Empfangssignal nicht mehr erkennen lässt.

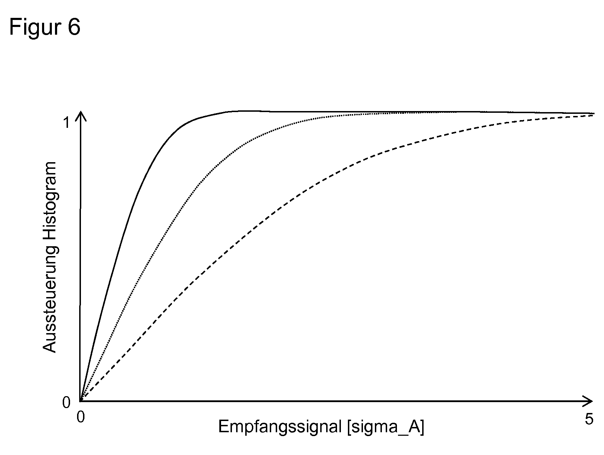

Der Rauschpegel bietet damit einen Parameter, mit dem die Empfindlichkeit des Histogramms eingestellt werden kann, also welche Echos noch aufgelöst werden, insbesondere durch Maximalausschlag, und welche nicht. Dieser analytisch beschreibbare Zusammenhang wird nun anhand der Figur 6 systematisiert. Darin sind Kennlinien der Übertragungsfunktion analog-digital, also der Aussteuerung des digitalen Histogramms in Abhängigkeit von dem analogen Empfangssignal für unterschiedliche Rauschpegel gezeigt, nämlich mit durchgezogener Kennlinie für einen schwachen Rauschpegel mit Sigma = 0,5, mit gepunkteter Linie für einen mittleren Rauschpegel mit Sigma = 1 und mit gestrichelter Linie für einen stärkeren Rauschpegel mit Sigma = 2. Die Einheiten des Rauschpegels sind damit vergleichbar mit denjenigen des Empfangssignals auf der X-Achse. Die Y-Achse ist so normiert, dass der Wert Eins einem mit Maximalausschlag ausgesteuerten Histogramm entspricht.

Bei sehr geringem Rauschen steuert bereits ein sehr schwaches Signal, beispielsweise ein Störpuls, das Histogramm stark aus oder sättigt es sogar. Mit Vergrößerung des Rauschens flacht die zugehörige Kennlinie ab. Durch Einstellen des Rauschpegels kann die Kennlinie nun so beeinflusst werden, dass schwache Signale nur zu einer geringen Aussteuerung des Histogramms führen, während die relevanten Nutzsignale voll aussteuern. Dadurch können Nutzsignale und Störsignale im Histogramm voneinander unterschieden werden. Voraussetzung bleibt, dass das schwächste Nutzsignal stärker ist als das stärkste Störsignal, denn das Histogramm kann keine Eigenschaften herausarbeiten, die schon im Rohsignal nicht erkennbar waren.

Der Effekt lässt sich experimentell beobachten, wenn Rauschen durch natürliche Einflüsse das analoge Eingangssignal überlagert. Bei Einstrahlung starken Fremdlichts beispielsweise reduziert sich die Amplitude des Nutzsignals im Histogramm. Das ist ein grundsätzlich anderes Verhalten als bei herkömmlicher Einzelpulsauswertung. Dort vergrößert Fremdlicht zwar das Rauschen des Signals und verschlechtert das Signal-Rausch-Verhältnis, aber die Signalhöhe des Nutzsignals an sich bleibt vom Fremdlicht unberührt.

Die Erfindung nutzt vorzugsweise kein natürliches Rauschen mit nicht oder schlecht beeinflussbarem Rauschpegel, sondern fügt gezielt ein künstliches Rauschen hinzu, mit dem eine gewünschte Kennlinie gemäß Figur 6 eingestellt wird.

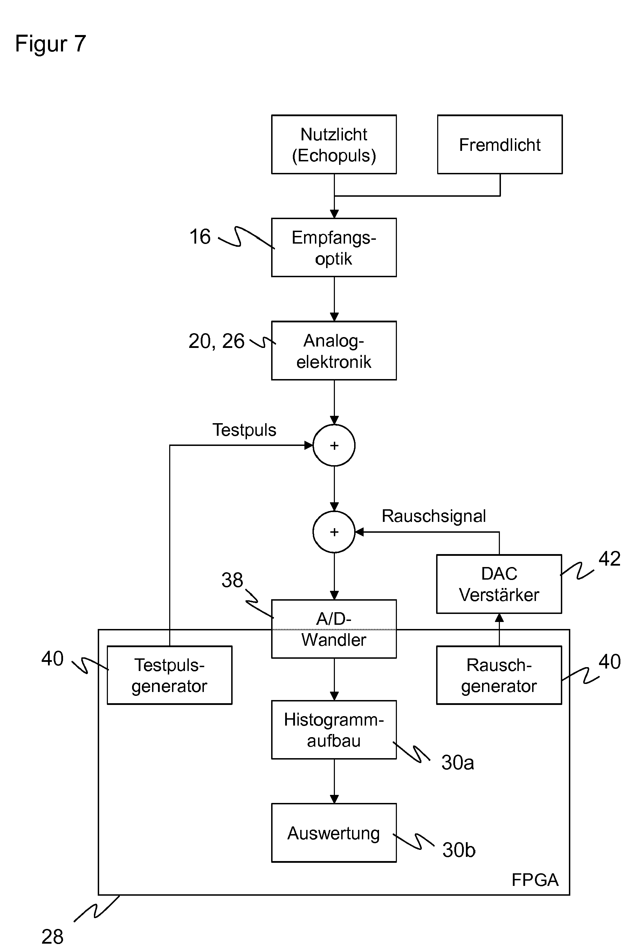

Figur 7 zeigt ein entsprechendes Blockschaltbild des Empfangspfades. Das physikalische Eingangssignal ist das Nutzlicht mit dem Echopuls, der durch Reflexion des Sendepulses an dem Objekt 18 entstanden ist. Diesem Eingangssignal kann sich noch Fremdlicht als eine Komponente natürlichen Rauschens überlagern. Über die Empfangsoptik 16 wird das Empfangslicht auf den Lichtempfänger 20 gebündelt, in ein analoges Empfangssignal gewandelt und wie zu Figur 2 beschrieben, analog vorverarbeitet. Vor der Digitalisierung wird ein Rauschsignal mit einem Rauschpegel hinzugefügt, welcher eine gewünschte Empfindlichkeit einstellt. Außerdem kann ein Testpuls eingekoppelt werden, der später erläutert wird. Nach der Digitalisierung in dem A/D-Wandler 38 erfolgt der Histogrammaufbau 30a und die anschließende Auswertung 30b.

Der Begriff "Rauschen" ist in diesem Zusammenhang als eine Störspannung zu sehen, die in einem breiten, jedoch endlichen Frequenzspektrum als Störgröße zum Nutzsignal addiert werden soll. Das Störsignal sollte weißem Rauschen ähneln, um eine Fehlinterpretation als Nutzecho in der späteren Auswertung zu verhindern, also ein stochastisches Signal mit konstantem Leistungsdichtespektrum und einer Normalverteilung sein.

Die Erzeugung des Rauschens kann auf diversen Wegen erfolgen. Figur 7 zeigt eine digitale Variante mit einem Rauschgenerator 40, der auf dem FPGA 28 implementiert ist. Durch Verschachtelung mehrerer Zufallszahlengeneratoren und Schieberegister kann die Begrenzung durch die Taktfrequenz des FPGA 28 überwunden werden. Ein nachgeschalteter DAC 40 (Digital Analog Converter) ermöglicht es, das zunächst digitale Rauschsignal auf das analoge Empfangssignal aufzuaddieren. Durch eine zusätzliche variable Verstärkung, beispielsweise mittels PGA (Programmable Gain Amplifier), hat die Steuer- und Auswertungseinheit 30 die Möglichkeit, den Rauschpegel zu verändern.

Der Rauschgenerator kann prinzipiell abweichend von Figur 7 auch analog aufgebaut sein, beispielsweise als Zener-Rauschgenerator, bei dem eine Diode oder die Basis-Emitter-Strecke eines Transistors in Sperrrichtung über dessen Durchbruchspannung betrieben wird. Das sich ergebende elektromagnetische Feld erzeugt dann ein (Schrot)rauschsignal, das eine hohe Frequenzbandbreite von mehr als 10 GHz aufweisen kann. Die Auswahl zwischen analoger und digitaler Implementierung des Rauschgenerators ist prinzipiell frei und hängt nicht zuletzt von dem gewünschten Frequenzspektrum des Rauschsignals sowie den Eigenschaften von Nutzsignal und dessen Abtastung ab.

Prinzipiell kann das Rauschen auch im optischen Signal eingespeist werden, beispielsweise Schrotrauschen durch Fremdlicht. Eine Einspeisung unmittelbar vor dem Digitalisieren ist aber einfacher umzusetzen und auch deshalb vorteilhaft, weil dann keine zwischenliegenden Signalverarbeitungsschritte mehr Einfluss auf das Rauschen nehmen können.

Erwähnt werden sollte noch, dass die Überlagerung des Empfangssignals mit Rauschen nicht ausschließlich vorteilhaft ist, weil damit zwangsläufig auch ein Informationsverlust verbunden ist. Das darf man nicht am Signal-Rausch-Verhältnis im Einzelsignal messen, weil ein ausreichend zufälliges Rauschen durch die Wiederholungen ausgemittelt wird und sich gegen die systematischen Nutz- und Störechos nicht durchsetzt. Besonders bei Einstrahlung starken Fremdlichts wird dennoch auch eine Verschlechterung der Messgenauigkeit beobachtet. Das muss also gegen die Vorteile einer aktiven Einstellbarkeit der Empfindlichkeit abgewogen werden.

Bei einem Sensor 10, der in der Sicherheitstechnik eingesetzt wird, sind die einleitend genannten üblichen Sicherheitsanforderungen natürlich auch mit zusätzlichem Rauschen einzuhalten. Aus sicherheitstechnischer Sicht ist es heikel, Einfluss auf die Empfindlichkeit der Signalverarbeitungskette zu nehmen, weil diese Eigenschaft direkte Auswirkungen auf die Detektionsfähigkeit des Systems hat. Es ist deshalb zumindest vorteilhaft, wenn nicht gar zwingend erforderlich, die Übertragungskennlinie zu testen. Dazu erzeugt ein Testpulsgenerator 44 des FPGA 28 einen Testpuls, der unmittelbar vor der Einspeisungsstelle des Rauschens auf das Empfangssignal addiert wird. Man kann diesen Testpuls außerhalb des eigentlichen Messbereichs im Histogramm platzieren, also sehr weit vorne oder hinten, dann hat der Testpuls keinen Einfluss auf die Messechos. Da der Testpuls vor dem analogen Vorverarbeiter 26 eingespeist wird, bleibt er zeitlich kompakt und regt nicht wie die Messpulse durch das Filter 32 eine Schwingung an. Alternativ könnte man den Vorverarbeiter mit testen, müsste dann aber genug Zeit zwischen Testpuls und möglichem nächsten Messpuls lassen, um das Testsignal abklingen zu lassen. Getestet wird nun, ob der Testpuls wie erwartet erfasst wird. Dazu kann beispielsweise die digitale Amplitude des Testpulses im Histogramm mit einem zuvor eingelernten Erwartungswert verglichen werden.

Bisher wurde ein geeigneter Rauschpegel gesucht, um eine Kennlinie und damit einen Arbeitspunkt einzustellen, welcher definiert, welche Signale der Sensor 10 als Störecho auffasst und welche Signale als Nutzecho. Das Einspeisen des Rauschens hat aber noch weitere Vorteile und bietet zusätzliche Möglichkeiten.

Das künstliche Rauschen bietet eine Fremdlichtkompensation. Es wird erfindungsgemäß ein Rauschen zum Empfangssignal addiert, um die Übertragungskennlinie definiert einzustellen. Tritt zusätzlich natürliches Rauschen auf, vor allem durch Fremdlichteinfluss, so kann das künstliche Rauschen gerade um dieses natürliche Rauschen vermindert werden. Das sorgt zum einen dafür, dass der gewünschte Arbeitspunkt trotz des natürlichen Rauschens eingestellt bleibt. Andererseits bedeutet dies aber auch, dass der Einfluss des natürlichen Rauschens oder Fremdlichts gar nicht mehr zum Tragen kommt und vollständig aus dem System eliminiert ist. Das gelingt natürlich nur, solange das natürliche Rauschen geringer bleibt als das einzustellende künstliche Rauschen. Erkennt das System ein natürliches Rauschen oberhalb dieser Schwelle, so kann die beste Lösung darin liegen, solange kein zusätzliches Rauschen einzuspeisen, um dem gewünschten Arbeitspunkt zumindest so nahe zu kommen, wie unter den gegenwärtigen Bedingungen möglich.

Der Rauschpegel stellt eine Übertragungskennlinie und damit einen gewissen Dynamikbereich ein. Da lediglich der Verstärkungsfaktor geändert werden muss, erlaubt das System eine Umstellung auf eine andere Übertragungskennlinie von einem Sendepuls zum anderen. Dies wird in einer bevorzugten Ausführungsform genutzt, um den Dynamikbereich zu erweitern (HDR, High Dynamic Range). Man bildet aus den Einzelmessungen, die gemeinsam ein Histogramm erzeugen, mehrere Untergruppen und stellt für jede Untergruppe einen anderen Rauschpegel ein. Besteht beispielsweise das Histogramm aus 84 Einzelmessungen, so werden 42 Einzelmessungen mit Übertragungskennlinie A, 21 Einzelmessungen mit Übertragungskennlinie B und 21 Einzelmessungen mit Übertragungskennlinie C aufgezeichnet. Die Übertragungskennlinien führen zu unterschiedlichen Empfindlichkeiten. Ein Histogramm, das derart mit den Gruppengrößen und Kennlinien entsprechenden unterschiedlichen Gewichtungen akkumuliert wird, erweitert den Dynamikbereich der Abbildung des analogen Signals auf das digitale Histogrammsignal deutlich. Das hat zwar keinen Einfluss auf den maximalen Dynamikbereich des analogen Signalverarbeitungsteils, aber solange die Dynamik ohnehin maßgeblich durch die digitale Abtastung begrenzt ist, bringt es dennoch eine erhebliche Verbesserung.

Kombiniert man die Kennlinieneinstellung durch den Rauschpegel mit einer parallelen Abtastung des analogen Empfangssignals an mehreren Komparatoreingängen des FPGA 28, so erreicht man damit eine parallele mehrkanalige Abtastung mit verschiedenen Empfindlichkeiten. In einem einfachen Auswertungsschema wird ein unempfindlicher Kanal nur dazu verwendet, relevante Nutzechos grob zu lokalisieren, während die eigentliche Empfangszeitpunktbestimmung in einem empfindlichen Kanal, dort aber gleich im relevanten Zeitintervall vorgenommen wird. Dadurch wird eine maximale Messgenauigkeit mit der Möglichkeit kombiniert, Störechos auszufiltern. Allgemein erweitert die mehrkanalige Abtastung den digitalen Dynamikbereich, indem durch anschließende gemeinsame Auswertung der Kanäle die besten Messergebnisse ausgewählt oder miteinander verrechnet werden.

Ein solches System eignet sich auch zur Detektion im Nebel. Aufgrund des Filters 32 werden die eher niederfrequenten Nebelechos ohnehin schon recht gut unterdrückt. Durch den erfindungsgemäßen Aufbau wird nun auch eine hohe Dynamik und eine zusätzliche Unterscheidbarkeit von Echos bereitgestellt. Schwache Nebelechos können damit sauber von Objektechos getrennt werden.

## Patentansprüche

1. Entfernungsmessender Sensor (10) zur Erfassung und Abstandsbestimmung von Objekten (18) in einem Überwachungsbereich mit einem Sender (12) zum Aussenden von Sendepulsen, einem Empfänger (20) zum Erzeugen eines Empfangssignals aus den in dem Überwachungsbereich remittierten Sendepulsen, einem A/D-Wandler (38) zum Digitalisieren des Empfangssignals und einer Steuer- und Auswertungseinheit (28, 30), die dafür ausgebildet ist, über den Sender (12) eine Vielzahl von Sendepulsen auszusenden, die daraufhin von dem Empfänger (20) erzeugten Empfangssignale in einem Histogramm (110) zu sammeln und aus dem Histogramm (110) einen Empfangszeitpunkt und somit einen Messwert für die Signallaufzeit von dem Sensor (10) zu dem Objekt (18) zu bestimmen,
**gekennzeichnet durch**
einen Rauschgenerator (40), der dafür ausgebildet ist, dem Empfangssignal vor dessen Digitalisierung in dem A/D-Wandler (38) ein Rauschsignal in Form eines auf das Empfangssignal addierten Zufallsrauschens hinzuzufügen, wobei der Rauschpegel **durch** die Steuer- und Auswertungseinheit (30) veränderbar ist, um die Empfangsempfindlichkeit des Sensors (10) über das Verhältnis von Nutzsignal zu Rauschsignal einzustellen.

2. Sensor (10) nach Anspruch 1,
wobei der A/D-Wandler (38) als Binarisierer ausgebildet ist.

3. Sensor (10) nach Anspruch 1 oder 2,
wobei zwischen Empfänger (20) und A/D-Wandler (38) eine analoge Vorverarbeitungsschaltung (26) mit einem Filter (30) zur Umwandlung des zunächst unipolaren Empfangssignals (102) in ein bipolares Signal (104) angeordnet ist.

4. Sensor (10) nach einem der vorhergehenden Ansprüche,
wobei die Steuer- und Auswertungseinheit (30) auf einem digitalen Baustein (28), insbesondere in programmierbarer Logik, in ASIC oder auf einem FPGA implementiert ist.

5. Sensor (10) nach einem der vorhergehenden Ansprüche,
wobei der Rauschgenerator (40) digital implementiert ist, insbesondere auf dem digitalen Baustein (28).

6. Sensor (10) nach einem der vorhergehenden Ansprüche,
wobei die Steuer- und Auswertungseinheit (30) dafür ausgebildet ist, einen geeigneten Rauschpegel des Rauschgenerators (40) in einer Kalibrierung vorab festzulegen.

7. Sensor (10) nach einem der vorhergehenden Ansprüche,
wobei die Steuer- und Auswertungseinheit (30) dafür ausgebildet ist, beim Festlegen eines Rauschpegels des Rauschgenerators (40) ein natürliches Rauschsignal zu berücksichtigen.

8. Sensor (10) nach einem der vorhergehenden Ansprüche,
wobei die Steuer- und Auswertungseinheit (28) dafür ausgebildet ist, den Rauschpegel des Rauschgenerators (40) während des Sammelns eines Histogramms (102) zu varüeren.

9. Sensor (10) nach einem der vorhergehenden Ansprüche,
wobei die Steuer- und Auswertungseinheit (30) für eine mehrkanalige Erfassung und Auswertung von Histogrammen (102) ausgebildet ist, um in den mehreren Kanälen durch unterschiedliche Rauschegel des Rauschgenerators (40) das Empfangssignal mit unterschiedlicher Empfindlichkeit auszuwerten.

10. Sensor (10) nach einem der vorhergehenden Ansprüche,
der einen Testsignalgenerator (44) zum Einkoppeln eines Testsignals in den analogen Teil des Empfangspfades aufweist, um die Funktion des Empfangspfads zu überprüfen.

11. Sensor (10) nach einem der vorhergehenden Ansprüche,
der als optoelektronischer Sensor, insbesondere Laserscanner ausgebildet ist, wobei der Sender (12) ein Lichtsender und der Empfänger (20) ein Lichtempfänger ist.

12. Verfahren zur Erfassung und Abstandsbestimmung von Objekten (18) in einem Überwachungsbereich, bei dem eine Vielzahl von Sendepulsen ausgesandt und aus den in dem Überwachungsbereich remittierten Sendepulsen Empfangssignale erzeugt werden, welche digitalisiert und in einem Histogramm (102) gesammelt werden, um aus dem Histogramm (102) einen Empfangszeitpunkt und somit einen Messwert für die Signallaufzeit zu dem Objekt (18) zu bestimmen, **dadurch gekennzeichnet,**
**dass** dem Empfangssignal vor dessen Digitalisierung ein Rauschsignal in Form eines auf das Empfangssignal addierten Zufallsrauschens hinzugefügt wird, wobei der Rauschpegel verändert wird, um die Empfangsempfindlichkeit der Erfassung über das Verhältnis von Nutzsignal zu Rauschsignal einzustellen.

## Claims

1. A distance measuring sensor (10) for the detection and distance determination of objects (18) in a monitoring area, the sensor (10) having a transmitter (12) for transmitting transmission pulses, a receiver (20) for generating a reception signal from transmission pulses remitted from the monitoring area, an A/D converter (38) for digitizing the reception signal, and a control and evaluation unit (28, 30) which is configured to transmit a plurality of transmission pulses via the transmitter (12), to accumulate the respective reception signals generated by the receiver (20) in a histogram (110), and to determine, from the histogram (110), a reception point in time and thus a measurement value for the signal time of flight from the sensor (10) to the object (18),
**characterized in that** the sensor (10) comprises a noise generator (40) configured to add a noise signal to the reception signal prior to its digitization in the A/D converter (38), the noise signal being a random noise, wherein the noise level is adaptable by the control and evaluation unit (30) in order to set a reception sensitivity of the sensor (10) via the ratio of useful signal and noise signal.

2. The sensor (10) according to claim 1,
wherein the A/D converter (38) is a binarizer.

3. The sensor (10) according to claim 1 or 2,
wherein an analog preprocessing circuit (26) including a filter (30) for a conversion of a unipolar reception signal (102) into a bipolar signal (104) is arranged between receiver (20) and A/D converter (38).

4. The sensor (10) according to any of the preceding claims,
wherein the control and evaluation unit (30) is implemented on a digital component (28), in particular in programmable logic, in ASIC or on an FPGA.

5. The sensor (10) according to any of the preceding claims,
wherein the noise generator (40) is digitally implemented, in particular on the digital component (28).

6. The sensor (10) according to any of the preceding claims,
wherein the control and evaluation unit (30) is configured to set a suitable noise level of the noise generator (40) in advance in a calibration.

7. The sensor (10) according to any of the preceding claims,
wherein the control and evaluation unit (30) is configured to take account of a natural noise signal when setting a noise level of the noise generator (40).

8. The sensor (10) according to any of the preceding claims,
wherein the control and evaluation unit (30) is configured to vary the noise level of the noise generator (40) during accumulation of a histogram (110).

9. The sensor (10) according to any of the preceding claims,
wherein the control and evaluation unit (30) is configured for a multi-channel recording and evaluation of histograms (110) in order to evaluate the reception signal with different sensitivities due to different noise levels of the noise generator (40) in the plurality of channels.

10. The sensor (10) according to any of the preceding claims,
the sensor (10) comprising a test signal generator (44) for injecting a test signal into the analog part of the reception path in order to check the function of the reception path.

11. The sensor (10) according to any of the preceding claims,
the sensor (10) being configured as an optoelectronic sensor, in particular a laser scanner, wherein the transmitter (12) is a light transmitter and the receiver (20) is a light receiver.

12. A method for the detection and distance determination of objects (18) in a monitoring area, wherein a plurality of transmission pulses is transmitted and reception signals are generated from the transmission pulses remitted from the monitoring area, the reception signals are digitized and accumulated in a histogram (110) in order to determine, from the histogram (110), a reception point in time and thus a measuring value for the signal time of flight to the object (18), **characterized in that** a noise signal is added to the reception signal prior to its digitization, the noise signal being a random noise, wherein the noise level is adapted in order to set a reception sensitivity of the detection via the ratio of useful signal and noise signal.

## Revendications

1. Capteur pour mesure de distance (10) pour la détection et la détermination de distances d'objets (18) dans une zone de surveillance, comprenant un émetteur (12) pour émettre des impulsions émises, un récepteur (20) pour engendrer un signal de réception à partir des impulsions émises réémises dans la zone de surveillance, un convertisseur analogique/numérique (38) pour numériser le signal de réception, et une unité de commande et d'évaluation (28, 30) qui est réalisée pour émettre, via l'émetteur (12), une pluralité d'impulsions émises, pour collecter à la suite de cela les signaux de réception engendrés dans le récepteur (20) dans un histogramme (110) et pour déterminer à partir de l'histogramme (110) un instant de réception et ainsi une valeur de mesure pour la durée de parcours du signal depuis le capteur (10) jusqu'à l'objet (18),
**caractérisé par**
un générateur de bruit (40) qui est réalisé pour ajouter au signal de réception avant sa numérisation dans le convertisseur analogique/numérique (38) un signal de bruit sous la forme d'un bruit aléatoire ajouté au signal de réception, dans lequel le niveau de bruit est susceptible d'être modifié par l'unité de commande et d'évaluation (30) pour régler la sensibilité de réception du capteur (10) au moyen du rapport du signal utile sur le signal de bruit.

2. Capteur (10) selon la revendication 1,
dans lequel le convertisseur analogique/numérique (3 8) est réalisé sous forme de convertisseur binaire.

3. Capteur (10) selon la revendication 1 ou 2,
dans lequel un circuit de prétraitement analogique (26), comprenant un filtre (30) pour convertir le signal de réception (102) tout d'abord monopolaire en un signal bipolaire (104), est agencé entre le récepteur (20) et le convertisseur analogique/numérique (38).

4. Capteur (10) selon l'une des revendications précédentes,
dans lequel l'unité de commande et d'évaluation est mise en oeuvre sur un composant numérique (28), en particulier en logique programmable, dans un composant ASIC ou sur un composant FPGA.

5. Capteur (10) selon l'une des revendications précédentes,
dans lequel le générateur de bruit (40) est mis en oeuvre sous forme numérique, en particulier sur le composant numérique (28).

6. Capteur (10) selon l'une des revendications précédentes,
dans lequel l'unité de commande et d'évaluation (30) est réalisée pour fixer au préalable un niveau de bruit approprié du générateur de bruit (40) dans un calibrage.

7. Capteur (10) selon l'une des revendications précédentes,
dans lequel l'unité de commande et d'évaluation (30) est réalisée, lors de la fixation d'un niveau de bruit du générateur de bruit (40), pour tenir compte d'un signal de bruit naturel.

8. Capteur (10) selon l'une des revendications précédentes,
dans lequel l'unité de commande et d'évaluation (28) est réalisée pour faire varier le niveau de bruit du générateur de bruit (40) pendant la collecte d'un histogramme (102).

9. Capteur (10) selon l'une des revendications précédentes,
dans lequel l'unité de commande et d'évaluation (30) est réalisée pour une détection et une évaluation d'histogramme (102) sur plusieurs canaux, afin d'évaluer le signal de réception avec une sensibilité différente dans les plusieurs canaux grâce à un niveau de bruit différent du générateur de bruit (40).

10. Capteur (10) selon l'une des revendications précédentes,
qui comprend un générateur de signal test (44) pour injecter un signal test dans la partie analogique du trajet de réception, afin de vérifier la fonction du trajet de réception.

11. Capteur (10) selon l'une des revendications précédentes,
qui est réalisé sous forme de capteur optoélectronique et en particulier sous forme de scanner à laser, dans lequel l'émetteur (12) est un émetteur de lumière et le récepteur (20) est un récepteur de lumière.

12. Procédé pour la détection et la détermination de distances d'objets (18) dans une zone de surveillance, dans lequel on émet une pluralité d'impulsions émises et on engendre, à partir des impulsions émises réémises dans la zone de surveillance, des signaux de réception numérisés et collectés dans un histogramme (102), afin de déterminer à partir de l'histogramme (102) un instant de réception et ainsi une valeur de mesure pour le temps de parcours du signal jusqu'à l'objet (18), **caractérisé en ce que**
on ajoute au signal de réception avant sa numérisation un signal de bruit sous la forme d'un bruit aléatoire ajouté au signal de réception, dans lequel le niveau de bruit est modifié afin de régler la sensibilité de réception de la détection au moyen du rapport du signal utile sur le signal de bruit.
